# EUROPEAN PATENT APPLICATION

(11) **EP 1 467 467 A2**
(43) Date of publication of application: **13.10.2004**
(21) Application number: 04076198.3
(22) Date of filing: 30.12.1999
(51) Int. Cl.: H02K 7/06

(54) **Eccentric rotor**

(30) Priority: 15.03.1999 JP 6827099; 31.03.1999 JP 9302099; 02.06.1999 JP 15449899; 15.07.1999 JP 20159699; 06.09.1999 JP 25108699
(62) Divisional of application: 99310641.8
(71) Applicant: Tokyo Parts Industrial Co., Ltd., Isesaki-shi, Gunma-ken 372-0022 (JP)
(72) Inventor: Yamaguchi, Tadao, Isesaki-shi, Gunma-ken 372-0022 (JP); Shindou, Manabu, Isesaki-shi, Gunma-ken 372-0022 (JP); Mita, Hiroyuki, Isesaki-shi, Gunma-ken 372-0022 (JP)
(74) Representative: Greene, Simon Kenneth

(57) **Abstract**

An eccentric rotor is provided in which a bearing is integrally formed with a commutator itself so that the number of parts is reduced, the manufacturing cost is lowered and mass production thereof is possible. The eccentric rotor includes a printed wiring commutator base member (1) where a shaft installation hole (1a) is formed at the centre thereof and a plurality of segment patterns (1s) are formed at the periphery of one surface thereof, and formed to be eccentric as an expanded fan viewed from a plane to have an extension portion integrally formed with the segment patterns eccentric, an air-core armature coil (3) integrally formed to be eccentric by an air-core armature coil position determination guide toward the other surface of the printed wiring commutator base member, an end connection portion (1b) of the air-core armature coil arranged at the printed wiring commutator base member within a range of not deviating from the turning circumference during rotation, a bearing portion inserted in the shaft installation hole so that part thereof protrudes toward the segment pattern and simultaneously the other part thereof is extended toward the other surface of the printed wiring commutator base member, and a resin eccentric weight (2f) arranged at the printed wiring commutator base member.

## Description

The present invention relates to an eccentric rotor used as a silent call device for a mobile communications apparatus, a compact vibrator motor having the rotor and a method of manufacturing the rotor, and more particularly, to an improvement of assembly and structure of an eccentric rotor which does not require an eccentric weight.

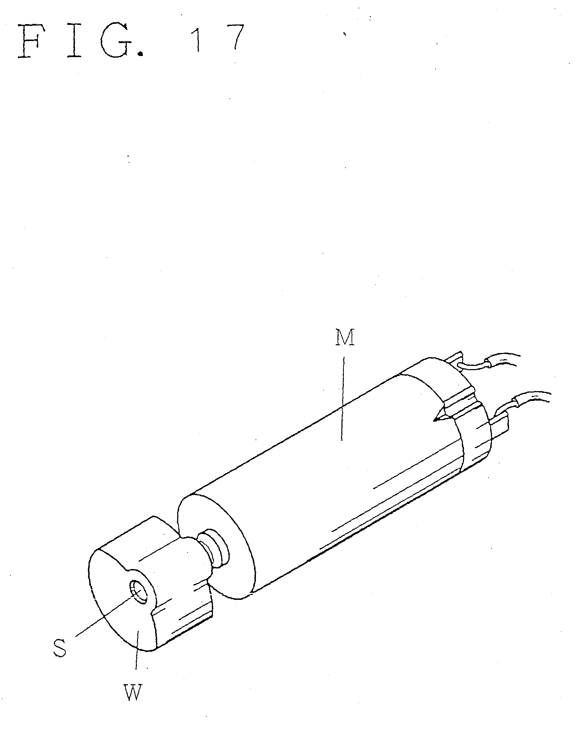

Referring to FIG. 17, as a silent call device for a pager or a mobile phone, an eccentric weight W made of tungsten alloy is coupled to an output shaft S of a cylindrical DC motor M. When the motor M rotates, vibrations are generated due to the difference in centrifugal force of the eccentric weight W.

However, in an apparatus such as a pager, as the addition of the eccentric weight W to the output shaft S requires a space in which the eccentric weight W rotates, there is a limit in designing the apparatus. Also, use of the expensive tungsten alloy increases the production costs.

The present applicant has suggested a cylindrical coreless vibrator motor in Japanese Patent Application No. Hei 2-309070 and the corresponding U.S. Patent No. 5107155, in which a built-in rotor itself is made to be eccentric without using an output shaft. The above motor having no output shaft and no eccentric weight is being favourably noticed by the market as there is no limit in design, use thereof is easy and there is no danger during rotation. However, as the motor requires three cylindrical coreless coils, the number of parts or processing steps increases, thus increasing the production costs.

In order to make a rotor with a core vibrate instead of the cylindrical coreless coil type rotor, the present applicant has suggested removing one of three salient pole type cores as shown in FIG. 4 of Japanese Patent Publication No. Hei 6-81443. The above two salient pole type cores, where one pole in three phases is missing, are preferable in the case of a motor such as a massager needing a relatively large amount of output. However, for a portable apparatus such as a portable terminal using a low voltage, as the portable apparatus is small, movement of the centre of mass is little (logically nonsense!) and the amount of vibrations is insufficient.

Also, as disclosed in U.S. Patent No. 5,341,057, the present applicant has suggested a compact vibrator motor having an eccentric armature iron core which is formed by arranging three salient poles made of magnetized material such that they are distributed at one angular side with respect to a rotor to face a field magnet having four alternate north and south pole sections. Also, the same technical concept has been disclosed in Japanese Laid-open Patent Application No. 9-261918. However, as the three armature iron cores made of magnetized material are distributed at one angular side and cogging torque (a force of being absorbed by a field magnet) increases in the case of the motor, a gap needs to be enlarged and the diameter of the motor itself cannot be reduced. Therefore, an improvement of a coreless vibrator motor with no iron core is needed.

The above motor having a built-in type eccentric rotor becomes a fixed shaft type as it does not need an output shaft. As the size of the above motor is reduced, the distance between armature coils decreases. Thus, connection of the end portion thereof to the commutator without damage to the armature coil is very difficult. Particularly, when a printed circuit board is used as a flat panel commutator as it is, where the end portion of the armature coil is directly welded thereon, welding of the end portion is not easy as the end portion is easily detached from a printed pattern due to elasticity of the end portion.

According to a first aspect of the present invention, there is provided an eccentric rotor comprising:
a printed wiring commutator base member (11, 111, 12) having first and second surfaces, formed into an expanded fan shape to have an air-core armature mounting surface when viewed in a plane, having a shaft installation hole (1a) formed at the rotation center thereof, and a plurality of commutator segment patterns (1s) formed at the periphery of the shaft installation hole on the first surface;
a bearing portion (22a) in the shaft installation hole being exposed at the first surface of the commutator base member and extending into the commutator base member towards the second surface;
at least two air-core armature coils (3);
an air-core, armature coil position determination guide (2e) arranged further away than the resin bearing holder in the outward radial direction from the center of rotation of the printing wiring commutator base member, the guide determining a position of the coils (3) on the printed wiring commutator base member as the coils (3) are installed so that the coils (3) are integrally formed to be eccentric using the air-core armature coil position determination guide;
an end connection portion (1f) of the air-core armature coil, arranged at the printed wiring commutator base member such that it does not overlap the air-core armature coils and does not protrude outside the outer circumference made as the printed wiring commutator base member rotates; and
characterised by an eccentric weight portion (2f, 2d) arranged at the printed wiring commutator base member to be eccentric to the centre of rotation,
characterised by the end connection portion being arranged at the opposite side of the centre of mass to the air-core armature coils.

Great vibrations can be generated by the rotor itself during rotation by the winding type armature coil and the eccentric weight which are integrally formed to be eccentric. The structure of a built-in type non-mold eccentric rotor according to the present invention provides vibrations with only an eccentric rotor in which the end portion of each armature coil can be easily connected to a commutator.

The structure allows the armature coil to be easily fixed whilst arranged to be inclined.

Bearings are incorporated within the commutator itself so that the number of parts are reduced and the manufacturing cost is lowered.

Sufficient maintenance strength is offered by using a printed wiring commutator base member in arranging a guide for determining the position of an air-core coil and a resin holder having a bearing portion, when a non-molding type flat rotor is configured to solve the problems of the conventional mold type rotor.

In an eccentric rotor according to the present invention, the nature of sliding and the amount of eccentricity coexist.

The problems of the conventional mold type rotor are overcome without loss of properties or sacrificing the thickness thereof, by forming a printed wiring coil at the eccentric printed wiring commutator base member constituting a non-mold type flat rotor.

An eccentric rotor of the present invention can advantageously be used as a low-profile eccentric rotor, that is, a thin vibrator motor.

The present invention lends itself particularly well to mass production by using the property of a printed wiring type commutator base member.

A shaft installation hole is formed in the centre of the printed wiring commutator base member for installing the same on a shaft, and a plurality of segment patterns are formed at the periphery of one surface thereof. When the planar surface of the printed wiring commutator base member is viewed from above, it appears to have the shape of an expanded fan, so that the segment patterns thereon are eccentric.

The air-core armature coil is integrally formed to be eccentric by the air-core armature coil position determination guide toward the other surface of the printed wiring commutator base member. The end connection portion of the air-core armature coil is arranged at the printed wiring commutator base member within a range of not deviating from a rotation limit during rotation.

The bearing portion is arranged at the position of the shaft installation hole of the printed wiring commutator base member so that part of the bearing portion protrudes toward the segment pattern and the other part of the bearing portion extends toward the other surface of the printed wiring commutator base member. The resin eccentric weight is arranged at the printed wiring commutator base member.

As a metal bearing is not needed, production costs can be lowered.

Preferably, the air-core armature coil position determination guide is formed by protruding axially from the second surface of the printed wiring commutator base member, connecting the printed wiring commutator base member with the same resin as the resin bearing holder portion, connected by a resin passing portion installed at the printed wiring commutator base member for support and reinforcement of the printed wiring commutator base member, and is formed such that part of the resin bearing holder and part of the air-core armature coil position determination resin guide protrude from the first surface of the printed wiring commutator base member. As the printed wiring commutator base member is used as a main frame, the air-core armature coil position determination guide and the resin eccentric weight can be maintained at high strength.

Preferably, the resin bearing portion, the air-core coil position determination guide and the eccentric weight portion are connected together by the same resin body.

Preferably, a conductive body for electrically connecting predetermined segment patterns on the printed wiring commutator base member from the rear side thereof is formed through a through hole, and a support function of the resin bearing holder is reinforced by using the through hole as a resin passing portion when the resin bearing holder is integrally formed.

Preferably, the air-core armature position determination guide is formed of a guide insertion hole formed in the printed wiring commutator member. The air-core armature coil can be easily installed.

As a feature of sliding needs not be considered, great vibrations can be generated using resin having great density.

According to another aspect of the present invention, there is provided an eccentric rotor in which the printed wiring commutator base member has printed wiring coils thereon that generate rotating force in the same direction as the direction of rotating force generated by the air-core coil. As the number of windings of at least one armature coil formed in print-wiring increases, the eccentric rotor becomes more effective

Due to at least one armature coil formed in print-wiring, an eccentric rotor having a three-phase overlapped armature coil is available without a sacrifice in thickness. As a conductive body contributing to torque is increased, an effective eccentric rotor is obtained.

Preferably, the printed wiring coils are formed at both surfaces of the printed wiring commutator base member and connected in series through the through-hole and functioning as one coil.

Preferably, a conductive body for electrically connecting predetermined commutator segment patterns of the printed wiring commutator base member from the rear side thereof is formed through a through hole, and a support function of the resin bearing holder is reinforced by using the through hole as a resin passing portion when the resin bearing holder is integrally formed.

Preferably the resin bearing holder, the air-core position determination resin guide, and the eccentric weight are integrally formed on the printed wiring commutator base member with the same sliding resin having a moving coefficient of 0.4. As the resin molding is performed at one time, productivity is improved.

According to another aspect of the present invention, there is provided a compact vibrator motor comprising:
an eccentric rotor;
a shaft, one end thereof is fixed to a part of a housing, for supporting the eccentric rotor to be capable of rotating;
a magnet, forming a gap facing the eccentric rotor and arranged at the part of the housing, for applying a magnetic force to the eccentric rotor;
a brush, arranged at the part of the housing in an inner diametric portion of the magnet, for supplying electric power to the eccentric rotor; and
the other part of the housing for pressing the other end of the shaft to fix it, in which the eccentric rotor is elastically pressed in a direction of the other part of the housing by using a sliding contact pressure of the brush.

According to another aspect of the present invention, there is provided a method of manufacturing an eccentric rotor, the method comprising the steps of:
(a) manufacturing a printed wiring commutator base member (1, 11, 111, 12) having first and second surfaces, formed into an expanded fan shape to have an air-core armature mounting surface when viewed in a plane, having a shaft installation hole (1a) formed at the center of rotation thereof, and a plurality of commutator segment patterns (1s) formed at the periphery of the shaft installation hole on the first surface, in which an end connection portion of the air-core armature coil arranged at the printed wiring commutator base member such that it does not overlap the air-core armature coil and does not protrude outside the outer circumference made as the printed wiring commutator base member rotates;
(b) setting the printed wiring commutator base member in an injection mold, and molding a resin bearing holder at the position of the shaft installation hole of the printed wiring commutator base member, a part thereof being exposed to the first surface and simultaneously installed to be extended axially from the second surface;
(c) integrally forming at least one wound type air-core armature coil 3 to be eccentric at the printed wiring commutator base member by using an air-core position determination guide; and
(d) connecting an end connection portion of the air-core armature coil to an en connection portion of the air-core armature coil arranged at the printed wiring commutator base member such that it does not overlap the air-core armature coil (3, C3, C4) and does not deviate from the outer circumference made as the printed wiring commutator base member rotates.

Preferably, the step of molding the bearing holder includes a step of concurrently molding the air-core coil position determination guide and the eccentric weight portion.

Preferably, the method further comprises a step of molding an eccentric weight portion, after the step of molding the resin bearing holder.

In the compact vibrator motor having the above structure according to the present invention for obtaining vibrations with only an eccentric rotor, the connection between the end portions of each air-core armature coil and the commutator is made easy, the armature coil can be easily fixed when installed to be inclined, particularly, mechanical noise can be reduced without using a sintered oil-storing bearing, the number of parts can be reduced by using the commutator as a bearing, and an eccentric rotor having a resin bearing portion which is advantageous in terms of costs can be provided.

Also, to solve the problems of the conventional mold type rotor, in configuring a non-mold type flat rotor, the resin holder having a bearing portion and the air-core coil position determination guide are arranged using the printed wiring commutator base member so that a sufficient strength is secured and the property of sliding and the amount of eccentricity can be compatibly maintained.

Further, as the printed wiring coil is formed in the eccentric printed wiring commutator base member forming the non-mold type flat rotor without sacrifice of the thickness, the problems or properties of the conventional mold type rotor can be solved. Thus, a low profile eccentric rotor, that is, a thin type vibrator motor can be provided. Also, using the advantages of the printed wiring commutator base member, a method of manufacturing a non-mold type flat rotor capable of mass production can be provided.

Examples of the present invention will now be described in detail with reference to the accompanying drawings in which:
FIG. 1 is a plan view showing major portions of a flat type coreless vibrator motor having an eccentric rotor according to a comparative example;
FIG. 2 is a plan view showing major portions of a vibrator motor using an eccentric rotor according to a modified example of FIG. 1 (an embodiment) of the present invention;
FIG. 3 is vertical sectional view taken along line α-β of FIG. 2;
FIGS. 4A and 4B show a modified example of the vibrator motor according to a preferred embodiment of the present invention, in which FIG. 4A is a plan view of a rotor portion viewed from one side of a segment and FIG. 4B is a bottom view thereof viewed from the segment's other side;
FIG. 5 is a vertical sectional view taken along line γ-δ of FIG. 4;
FIG. 6 is a vertical sectional view of a modified example of the vibrator motor of FIG. 4;
FIGS. 7, 8 and 10 are bottom views for explaining a method of manufacturing major members of the eccentric rotor according to the present invention;
FIG. 9 is a plan view of the eccentric rotor according to the present invention;
FIG. 11 is a bottom view showing major portions of the eccentric rotor used for the fourth preferred embodiment of the present invention (viewed the other side of the segment);
FIG. 12 is a plan view of the eccentric rotor, viewed from one side of the segment;

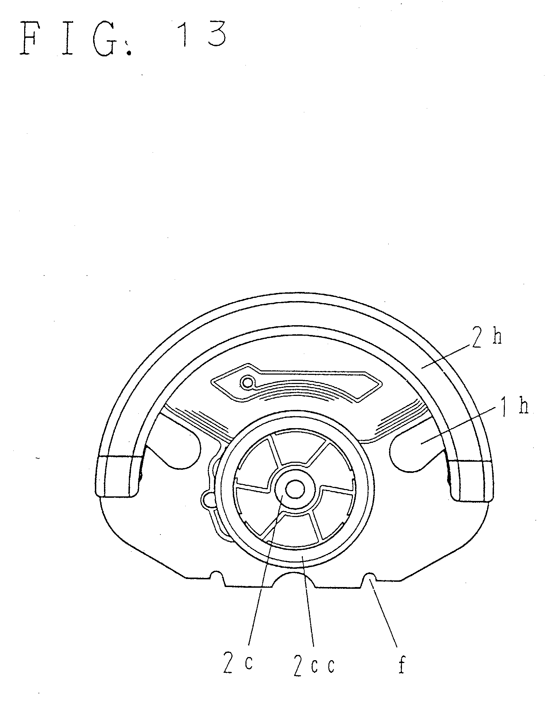

FIG. 13 is a bottom view showing the eccentric rotor integrated with a resin holder, viewed from the segment's side;
FIG. 14 is a plan view of the eccentric rotor integrated with a resin holder and formed into a non-mold type flat rotor, viewed from the opposite side of the segment;
FIG. 15 is a vertical sectional view of an axial direction gap type coreless vibrator motor using major members of the eccentric rotor shown in FIG. 9, taken along line ε-η of FIG. 9;
FIG. 16 is a view for explaining the operation of the axial direction gap type coreless vibrator motor using the above rotor; and,
FIG. 17 is a perspective view showing a conventional compact vibrator motor.

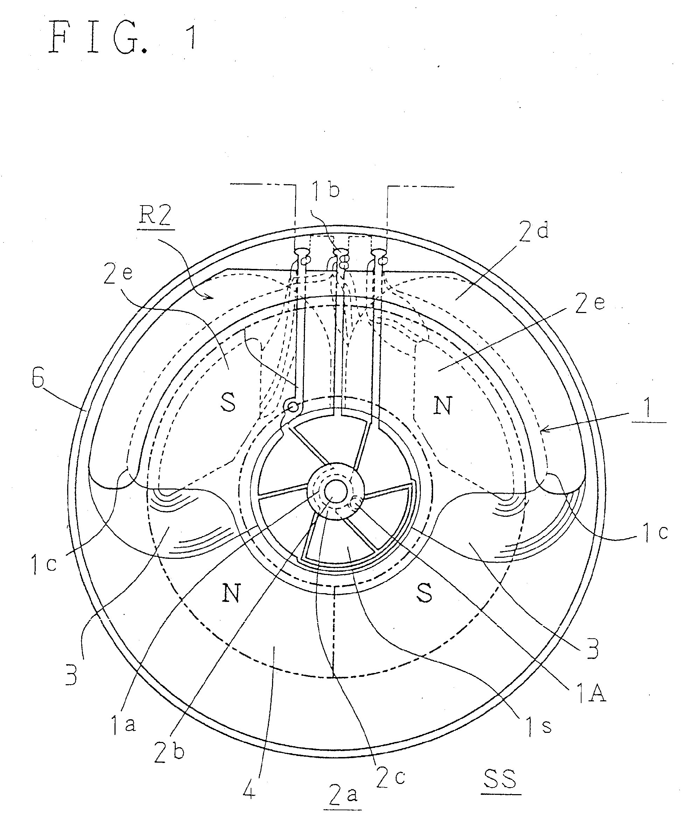

FIG. 1 shows major portions of a flat type coreless vibrator motor having an eccentric rotor. Reference numeral 1 denotes an eccentric commutator base member made of a printed wiring circuit board which is shaped as an expanded fan when the planar surface thereof is viewed from above and has a shaft installation hole 1a formed at the centre thereof. To encompass the eccentric commutator base member 1, highly slippery resin 2 exhibiting high density and a specific gravity of 6 is integrally and thinly formed on the entire surface of the fan-shaped eccentric commutator base member 1, so as to form an eccentric commutator SS. Six printed wiring segment patterns 1s having slits which are inclined form the radial direction for preventing sparking, are arranged at the eccentric commutator base member 1. An armature coil end connection terminal 1b (to be described later) protrudes from the semicircular arc shaped bottom portion of three segment patterns at the movement of the centre of mass. The eccentric commutator base member 1 is installed, by being extended with a reinforced portion 1c, to the inside of both ends 2a of a half-circle of which both ends are formed of high density highly slippery resin 2. Each of the segment patterns 1s are electrically connected to the segment patten on the opposite side of the shaft by a pattern on the surface and a through-hole 1A. A resin bearing holder 2a ascends from the high density highly slippery resin 2 toward the opposite segment pattern in the shaft installation hole 1a at the centre of the eccentric commutator base member 1. A bearing portion 2b is formed at the centre of the eccentric commutator base member 1 and is maintained at the eccentric commutator base member 1 by a dam portion 2c protruding toward the segment pattern from the high density, highly slippery resin 2.

In the eccentric commutator base member 1 having the above structure, an arc shaped portion 2d which becomes a portion of an eccentric weight for the movement of the centre of mass is installed at the semicircular outer circumferential portion. Air-core armature coil position determination fixing guides 2e, described later, are integrally formed with the high density, highly slippery resin 2, as indicated by a dotted line, at the inside surface of each of the six segment patterns 1s at an arranged open angle of 120°. The air-core armature coils 3 made of a winding around a self-fusing line are inserted in the air-core armature coil position determination fixing guides 2e and the beginning and termination end portions of the winding are wound around the armature coil end connection terminal 1b, and dip-soldered thereto, through a predetermined groove so as to not protrude above the thickness of the rotor, thus forming an eccentric rotor R2. A flat, circular magnet 4 for driving the rotor has north (N) and south (S) poles which are alternately positioned in four quadrants.

Also, the principle of operation in which one phase is open in the above three phase armature coil will be omitted as it is a well-known technology.

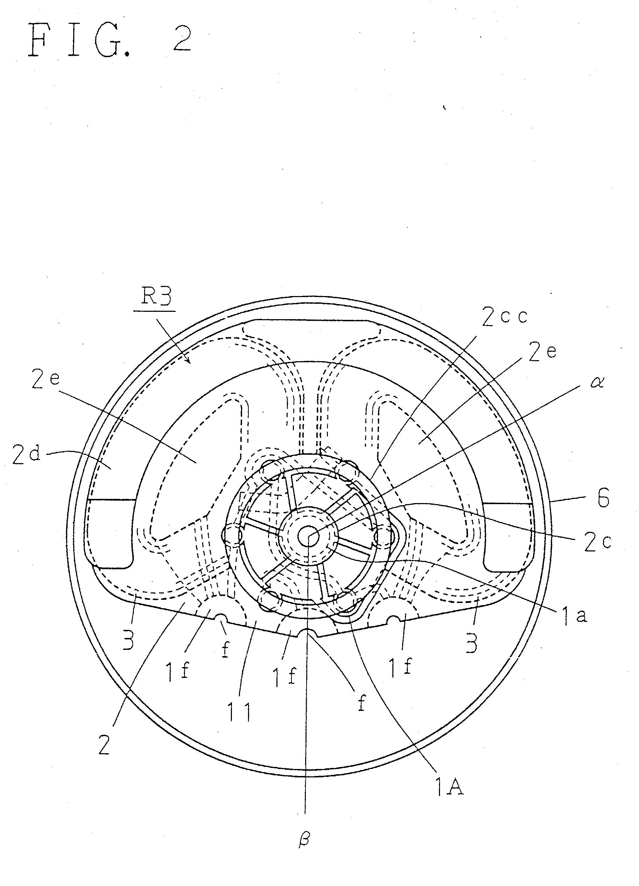

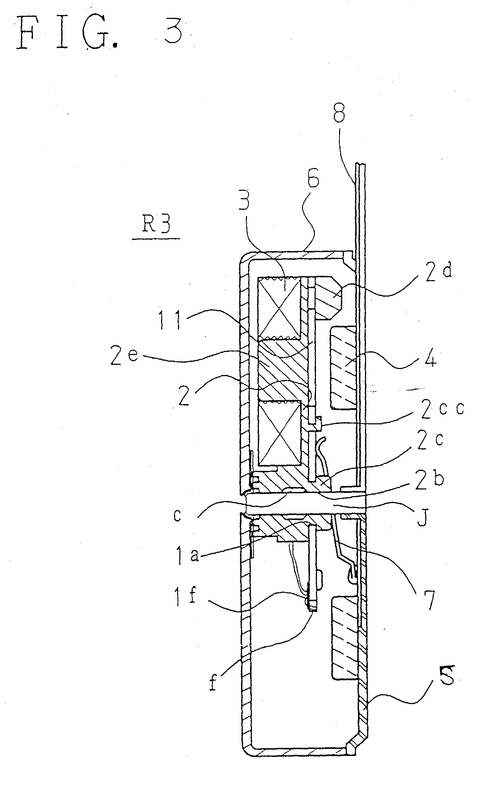

FIG. 2 shows a cross sectional view of the vibrator motor of FIG. 1 in which a modified eccentric rotor is used; and FIG. 3 shows a vertical sectional view of the vibrator motor shown in FIG. 2. The eccentric commutator base member 11 is formed to be a sector slightly greater than a semicircle and the armature coil end connection terminals 1f is installed opposite to the eccentric commutator base members 11 with respect to the centre of mass, unlike the above embodiment.

A notch f for hooking is formed at each of the armature coil end connection terminals If. The armature coil end connection terminal 1f is disposed so as not to overlap the air-core armature coils 3, when the planar surface thereof is viewed from above so that the connection to the end portion is made easy.

In the shaft installation hole 1a at the centre of the eccentric commutator base member 11, a resin bearing holder 2a lifted from the semicircular high density, highly slippery resin 2 is installed by being extended toward the opposite position of the segment pattern, and a bearing portion 2b is formed at the centre thereof. A dam portion 2c formed of the high density, highly slippery resin 2 protrudes toward the segment pattern. The second dam portion 2cc for reinforcement is installed further toward the segment pattern at the part of the resin bearing holder 2a via the through-hole 1A. Each of the dam portions 2c and 2cc is molded to prevent the resin from flowing the slits between each segment 1s.

The air-core armature coils 3 made of a winding around a self-fusing line are inserted in the air-core armature coil position determination fixing guides 2e and the beginning and termination end portions of the winding are soldered to the armature coil end connection terminal 1f, so as not to protrude above the thickness of the rotor, thus forming an eccentric rotor R3. Preferably, the air-core armature coil position determination fixing guides 2e, which fix the air-core armature coils 3 in place, are deformed by heating and fused, or are fixed by a reflow of powder or solid epoxy.

The motor including the eccentric rotor R3 is an axial direction gap type motor and is driven by the flat, circular magnet 4. Reference numeral 5 of FIG. 3 denotes a bracket made of a tin-plated steel plate for maintaining the magnet 4 and concurrently providing a magnetic path. The bracket 5 forms a housing with a case 6. A shaft J is rotatably installed through the bearing portion 2b of the resin bearing holder 2a. A pair of brushes 7 disposed at the bracket 5 sliding-contact the segment pattern at an open angle of 90° so that power is supplied to the armature coils 3 from the outside via a flexible substrate 8.

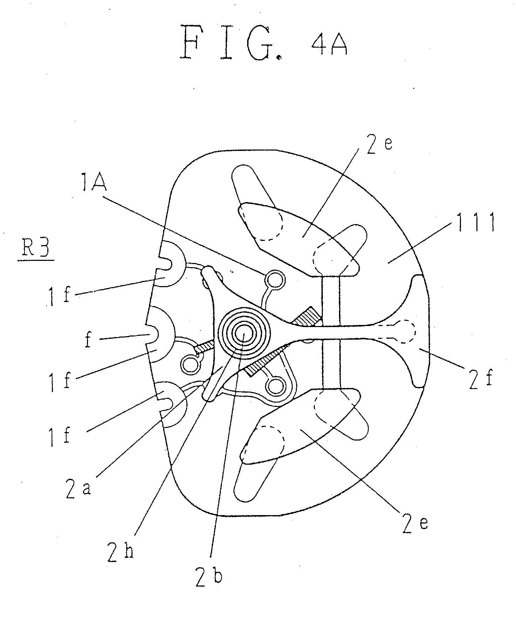

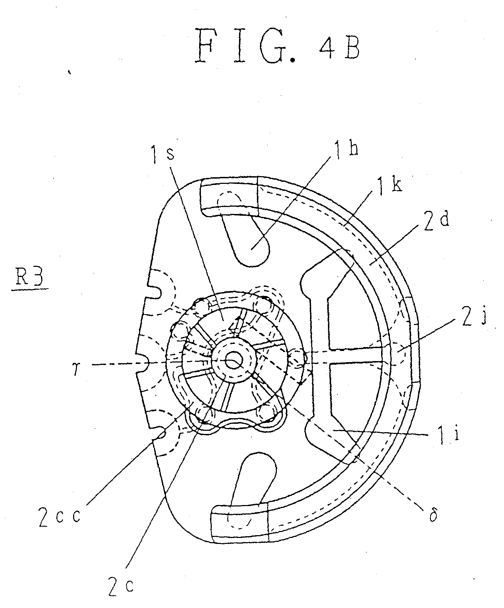

FIGS. 4A and 4B show a modified shape of the second preferred embodiment shown in FIG. 2, in which FIG. 4A is a cross sectional view of one side of the commutator and FIG. 4B is a cross sectional view of the other side of the commutator. That is, reference numeral 111 denotes a fan-shaped printed wiring commutator device and six segments 1s, surfaces of which are plated with a noble metal and having inclined slits, are arranged on one side thereof for spark prevention. A conductive body for electrically connecting the segments opposite to each other among the above segments is formed at an inner surface via a through-hole 1A. Reference numerals 1h, 1i, 1j and 1k denote resin passing portion which are one of the features of the present invention. The resin passing portion are reinforced when a resin holder, an air-core coil position determination guide, an eccentric weight which will be described later are integrally formed with the printed wiring commutator base member 11. The resin passing portions 1h and 1i are installed at the air-core coil position determination guide, the resin passing portions 1j and 1k formed by notching a part of the outer circumference are installed at the eccentric weight, and the through-hole 1B is installed at the resin bearing holder 2a.

A sliding portion 2h, where the bearing portion 2b and an oil storing groove rotatably installed at a shaft (which will be described later) are coaxially installed, is arranged at the resin bearing holder 2a, and passes through the through-hole 1A by leg portions which are arranged to be well balanced. The second dam portion 2cc at the surface and the first dam portion 2c at the central portion are reinforced by being coated with resin.

Part 2f of the eccentric weight lifts the arc-shaped portion 2d of the eccentric weight toward the segment through the resin passing portion 1j. Both ends of the arc-shaped portion 2d of the eccentric weight are tapered to prevent loss of wind during rotation.

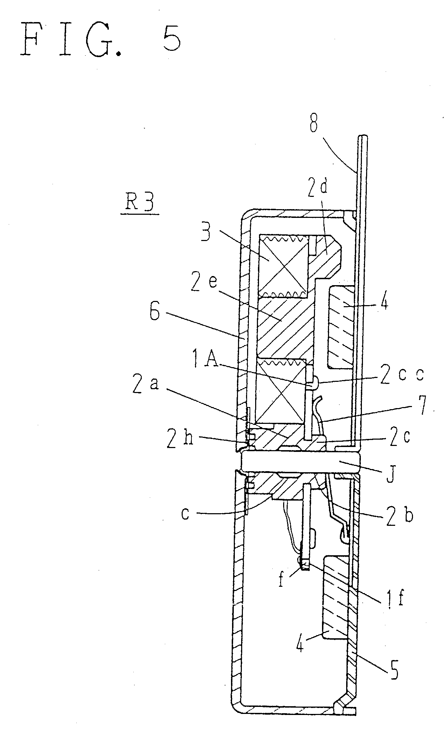

Next, FIG. 5 shows a flat coreless vibrator motor using the eccentric rotor R3. As the bearing portion 2b has a recess c of a few microns formed inside, loss of bearing is reduced. In a means for forming the recess c, the middle portion of the resin holder 2a is thicker than other portions as shown in the drawing so that a recess can be easily formed using the difference in percentage of contraction of resin. Also, the few-micron recess can be fabricated by excessive drawing with a mold pin.

The air-core coil position determination guide, the air-core armature coil 3 and the eccentric weight can be formed together with the single resin injection molding according to the above method. Thus, the structure is simplified and the cost is lowered. Also, as the air-core coils 3 can be directly installed at the printed wiring commutator base member 11, a gap can be made small and efficiency is increased.

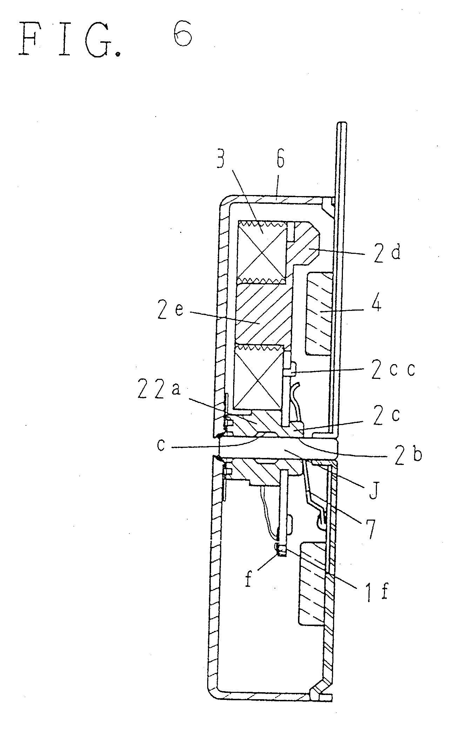

Also, as shown in FIG. 6, it is possible that the resin bearing holder 22a is formed of low density sliding resin and then the air-core coil position determination guides 2e and the eccentric weight portion is molded with a high density resin. In this case, a sintered oilless bearing can be used instead of the resin bearing holder 22a.

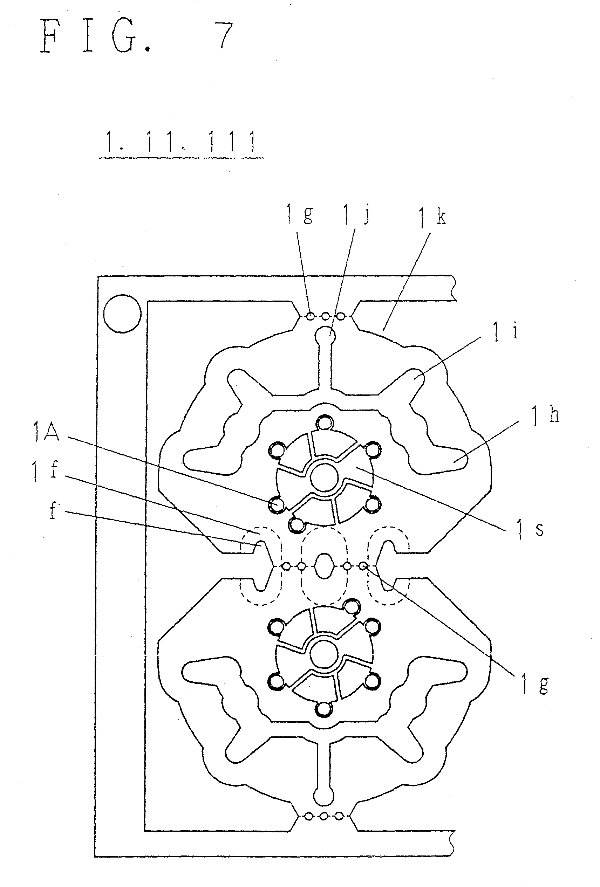

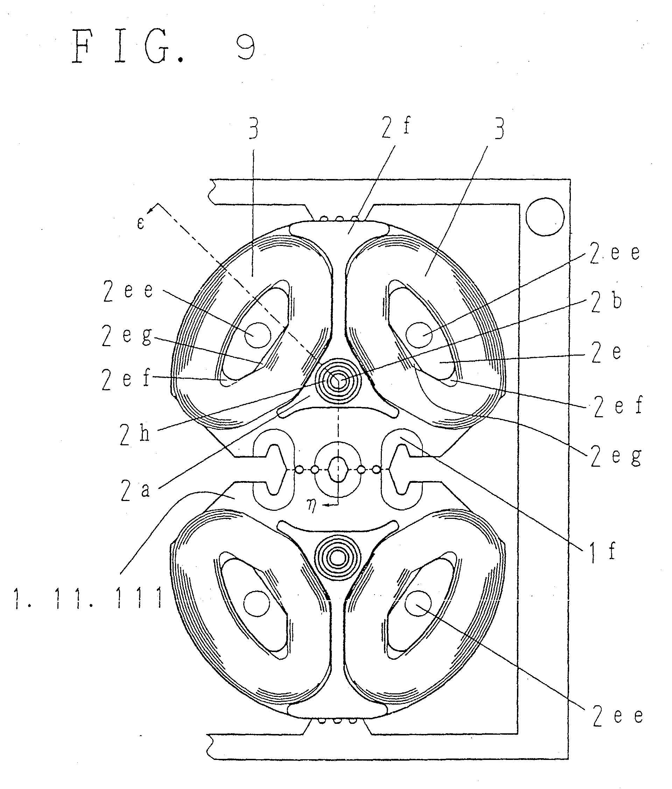

FIGS. 7, 8, 9 and 10 show a basic method of manufacturing an eccentric rotor having the above eccentric printed wiring commutator base member. FIGS. 7, 8 and 10 are bottom views and FIG. 9 is a plan view. That is, eccentric printed wiring commutator base members 1, 11 and 111 are integrally connected by the connection portions 1g at the same pitch for mass production and are manufactured using press.

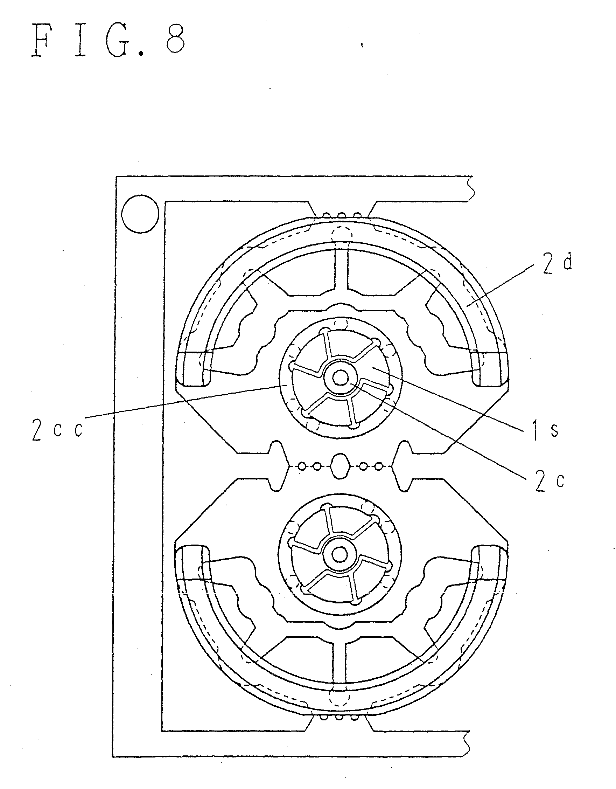

The printed wiring commutator base member 11 manufactured in the above method, as shown in FIGS. 8, 9 and 10, is set to an injection mold installed by being connected plurally at the same pitch. By outsert molding using resin having a specific gravity of, for example, 4-5, and a friction coefficient of 0.3, the resin holder 2a, the two air-core coil position determination guides 2e, and the part 2f of the eccentric weight connected to the resin bearing holder 2a are installed at the opposite side of the segment.

The bearing portion 2b in which the shaft J is rotatably installed, at which will be described later, and the sliding portion 2h where the oil storing groove is coaxially installed are arranged at the resin holder 2a. The leg portions which are arranged to be well balanced, penetrate the through-holes 1A and the second dam portion 2cc at the surface, and the first dam portion 2c at the central portion are coated with resin for reinforcement.

The part 2f of the eccentric weight lifts the arc-shaped portion 2d of the eccentric weight toward the segment through the resin passing portion 1j. Both ends of the other part 2d of the eccentric weight are tapered like the above leg shape to prevent loss of wind during rotation.

The air-core armature coils 3 are inserted in the air-core armature coil position determination guides 2e and the ends of a winding are hooked and soldered on notches f of the three air-core coil end connection terminals 1f, thus forming the eccentric rotor. In the drawing, r denotes a printed resistor for preventing spark.

Also, as a fixing method of the air-core armature coil 3, preferably, a head portion 2ee of the air-core armature coil position determination guide 2e is pressed and heated by a wedge-shaped jig, or powdered epoxy is heated and cured or fixed in a reflow manner using an ultraviolet curing type adhesive. Also, although one phase is open in the three-phase armature coil, a description thereof will be omitted as the principle of operation is a well-know technology.

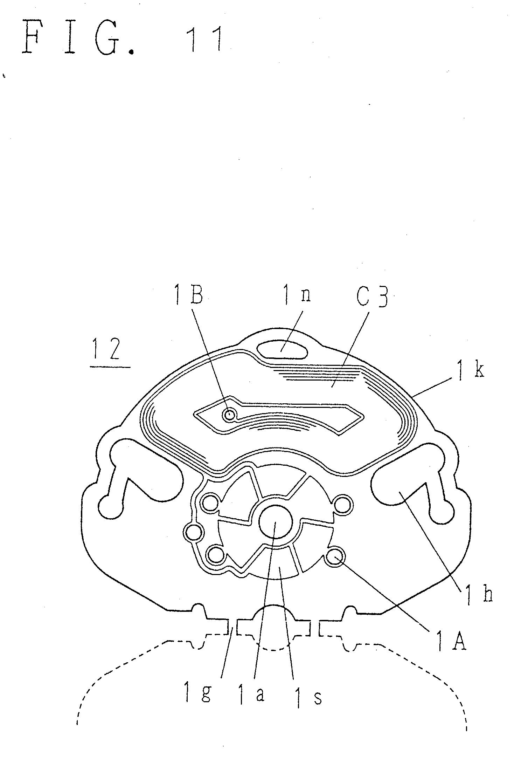

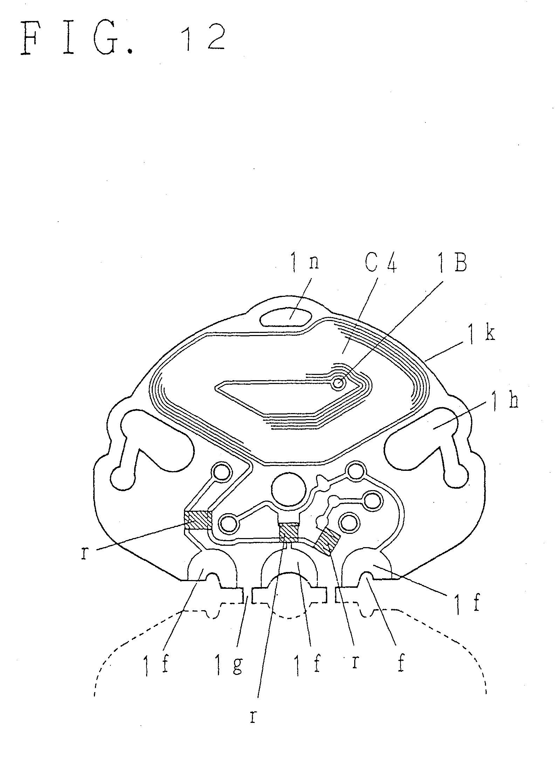

FIGS. 11 and 12 show an eccentric rotor according to the fourth preferred embodiment of the present invention. Here, reference numeral 12 denotes an eccentric printed wiring commutator base member formed to be an expanded fan shape when the planar surface thereof viewed from above, in which a shaft installation hole 1a is formed at the centre thereof at the same time as the six segments 1s of which surfaces are plated with the noble metal and having inclined slits installed at one side thereof for spark prevention. Part C3 of the armature coil is print-wired above the segments 1s, part C4 of the armature coil is print-wired on the other side of the eccentric printed wiring commutator 12, and the parts C3 and C4 are connected in series through the through-hole 1B to form a single armature coil. The resin passing portions 1h, 1k and 1n, which are characteristic features of the present invention, are reinforced when the resin bearing holder, the air-core coil position determination resin guide, and the resin eccentric weight are integrally formed with the printed wiring commutator base member 11 as described above. The resin passing portion 1h is hooked by the air-core coil position determination. resin guide and the resin eccentric weight, the slit 1n and the resin passing portion 1k formed by notching part of the outer circumference are hooked by the resin eccentric weight, and the through-hole 1A is hooked by the resin bearing holder. In the drawing, reference numeral 2ef denotes a space for drawing the end portion of the air-core armature coils 3.

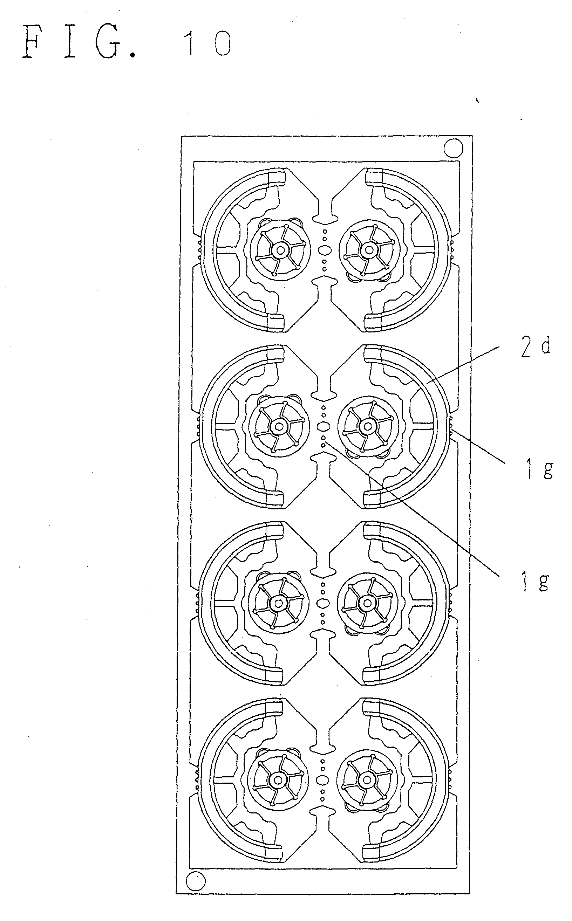

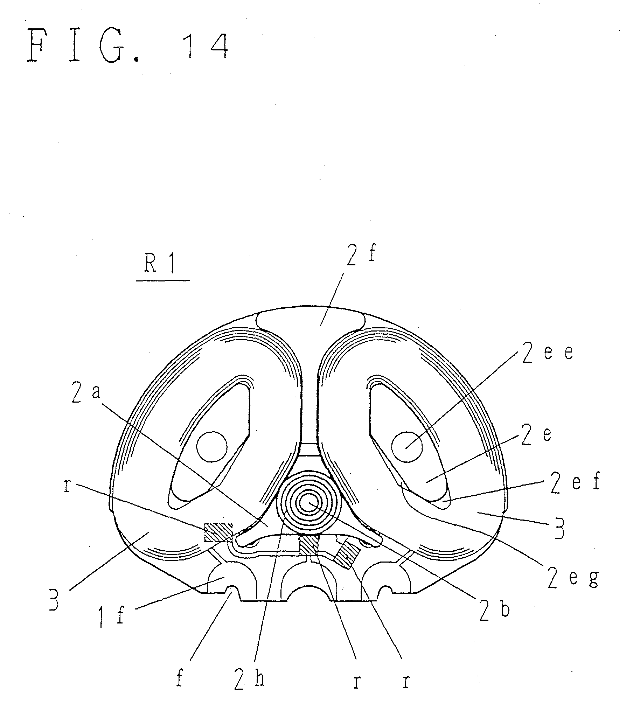

A plurality of printed wiring commutator base members 12, which have the above structure and are connected with the same pitch, are set to an injection mold, as shown in FIG. 10. As shown in FIG. 14, by outset molding using resin of about specific gravity 4-5 and moving friction coefficient of 0.3, the resin holder 2a, the two air-core coil position determination guides 2e, and the part 2f of the eccentric weight connected to the resin bearing holder 2a are installed at the opposite side of the segment.

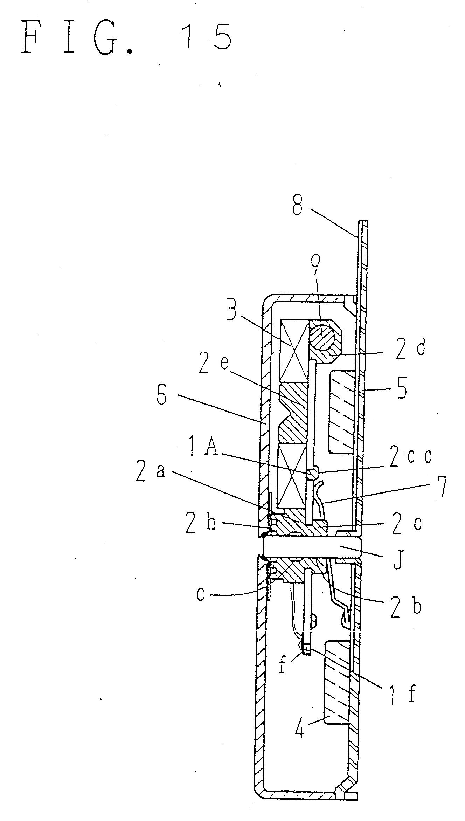

The axial direction gap type coreless vibrator motor using the above eccentric rotor R5 is assembled as shown in FIG. 15. Here, it is characteristic that an insulated copper wire 9 is embedded in the eccentric weight. In this case, the insulated copper wire 9 is coated with polyurethane except for cut-away portions of both ends thereof and formed to be arc-shaped so as not to be shorted by the printed wiring armature coil located inside. As a result, the position of the centre of mass can be moved much further so that vibrations become greater.

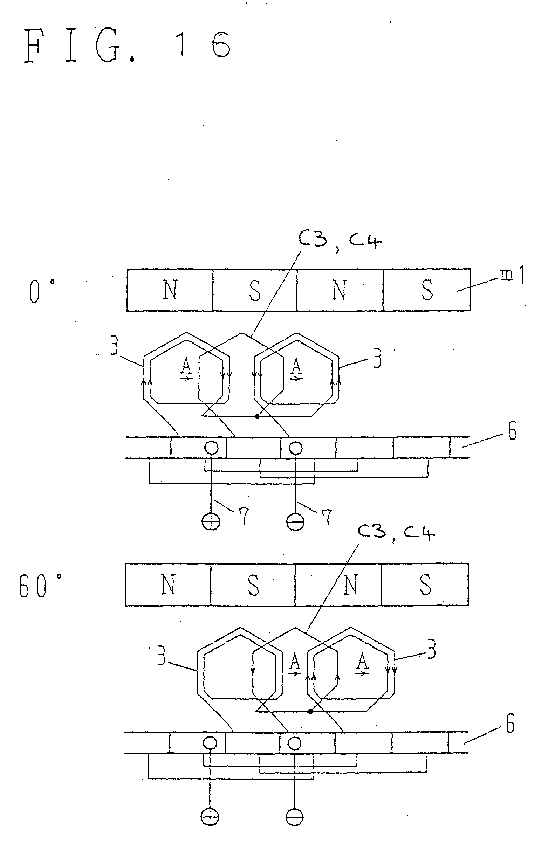

In the principle of operation of the axial direction gap type coreless vibrator motor using the eccentric rotor R5, referring to FIG. 16, when a DC voltage from a power source (not shown) is applied to a main and sub brush pair 7, at the position of 0 degrees, current flows in a direction indicated by arrows in the left and right winding type armature coils 3 via the printed wiring commutator, and rotational torque in a direction indicated by arrow A is generated according to Fleming's left-hand rule. When the rotation proceeds to a degree of 60°, rotational torque in the direction of arrow A is generated by the printed wiring armature coils C3 and C4 and the right winding type air-core armature coil 3. Anti-torque preventing rotation is not generated at other positions. Thus, as long as the power is supplied, the rotation continues cyclically. As two armatures are always electrically connected in three three-phase armatures, torque is improved compared to two three-phase armatures where one armature is open.

Also, it is preferable that, in integrally forming the resin holder 2a in the printed wiring commutator base member, part of a copper pattern portion which is a boundary with the resin portion is made wider by molding so as not to be shorted.

## Claims

1. An eccentric rotor comprising:
a printed writing commutator base member (11) having first and second surfaces, having a shaft installation hole (1a) formed at the center of rotation thereof, a plurality of commutator segment patterns (1 s) formed at the periphery of the shaft installation hole on the first surface, and extended from the commutator segment patterns to have an air-core armature coil mounting surface when viewed in a plane;
at least two air-core armature coils (3) arranged on the air-core armature coil mounting surface of the second surface, arranged eccentrically at the outside of the shaft installation hole (1 a) in a radial direction, and each air-core armature coil (3) having a plurality of ends;
a plurality of air-core armature coil ends connection terminals (1f) formed by printing on the second surface of the printed wiring commutator base member (11), connected to the ends of each of the air-core armature coils (3), arranged outside the shaft installation hole (1 a) in a radial direction such that they do not to overlap the air-core armature coils (3), in which some of the air-core armature coil ends connection terminals (1f) and the center of mass of the rotor are arranged on opposing sides of the center of rotation so that the respective air-core armature coil ends connection terminals are connected to the commutator segment patterns (1 s) corresponding thereto;
an oilless bearing (2a, 22a) for installing a shaft (J) extending through the bearing arranged in the shaft installation hole of the printed wiring commutator base member (11) and having one side exposed at the first surface and the other side extending from the second surface in an axial direction; and
a resin member (2f, 2d) integrally fixed to the printed wiring commutator base member, extended from the oilless bearing in the radial direction, and located between the air-core armature coils (3),
wherein a metal body (9) is embedded in the resin member, and is located eccentrically with respect to the center of rotation.

2. A compact vibrator motor comprising:
an eccentric rotor (R2, R3) according to claim 1;
a shaft (J), one end of which is fixed to a bracket (5), for supporting the eccentric rotor (R2, R3) to be capable of rotating;
a magnet (4) facing the eccentric rotor, separated from the eccentric rotor by a gap, and arranged at the bracket (5), for applying a magnetic force to the eccentric rotor;
a brush (7), arranged at the bracket (5) in an inner diameter portion of the magnet, for supplying electric power to the eccentric rotor; and
a case (6) for supporting the other end of the shaft (J),
wherein the eccentric rotor (R2, R3) is elastically pressed against the case by a contact pressure of the brush (7).

3. A method of manufacturing an eccentric rotor defined in claim 1 or 2, the method comprising the steps of:
(a) manufacturing a printed wiring commutator base member (1, 11, 111, 12) having first and second surfaces, formed to have an air-core armature coil mounting surface when viewed in a plane and having a shaft installation hole (1 a) formed at the center of rotation thereof, having a plurality of commutator segment patterns (1s) formed at the periphery of the shaft installation hole on the first surface, arranged outside the shaft installation hole (1 a) in a radial direction such that they do not to overlap the air-core armature coils (3), in which part of air-core armature coil ends connection terminals (1f) and the center of mass of the rotor are arranged on opposing sides of the center of rotation so that the respective air-core armature coil ends connection terminals are connected to the commutator segment pattern (1s) corresponding thereto;
(b) fixing at least two wound type air-core armature coils (3) on the air-core armature coil mounting surface of the printed wiring commutator base member to be located eccentrically with respect to the center of rotation and connecting a plurality of ends of the air-core armature coils to the air-core armature coil ends connection terminals; and
(c) setting the printed wiring commutator base member (1, 11, 111, 12) in an injection mold and integrally forming, with a resin member (2d), an oilless bearing which is for installing a shaft (J) through the bearing at the center of the shaft installation hole (1 a) so that part of the oilless bearing is exposed to the first surface and the oilless bearing extends axially from the second surface, and integrally molding, with the resin member (2d), a metal body (9) so that the metal body is located eccentrically with respect to the center of rotation.
